Europäisches Patentamt

European Patent Office

Office européen des brevets

(19)

(11) Veröffentlichungsnummer: **0 042 992**
**B1**

(12) **EUROPÄISCHE PATENTSCHRIFT**

(45) Veröffentlichungstag der Patentschrift:
16.05.84

(21) Anmeldenummer: 81104286.0

(22) Anmeldetag: 04.06.81

(51) Int. Cl.³: **C 04 B 13/14,** C 04 B 11/09,
B 28 B 1/26

(54) **Masse und Zusatzmittel zur Herstellung von Gipsformen.**

(30) Priorität: 27.06.80 DE 3024152

(43) Veröffentlichungstag der Anmeldung:
06.01.82 Patentblatt 82/1

(45) Bekanntmachung des Hinweises auf die Patenterteilung:
16.05.84 Patentblatt 84/20

(84) Benannte Vertragsstaaten:
CH DE FR GB IT LI NL SE

(56) Entgegenhaltungen:
DE - A - 2 430 683
DE - A - 2 657 252
US - A - 3 748 290

ZEMENT-KALK-GIPS, Vol. 4, Nr 5, Mai 1951 Wiesbaden
GRAF et al. "Gipshilfsprodukte, ihre Anwendung und
Wirkung" Seiten 117 bis 123

(73) Patentinhaber: ZSCHIMMER & SCHWARZ GmbH & Co.
CHEMISCHE FABRIKEN,
Max-Schwarz-Strasse 4-5 Postfach 2179,
D-5420 Lahnstein (DE)

(72) Erfinder: Weland, Werner, Ing. grad., Hohlstrasse 7,
D-5433 Siershahn (DE)
Erfinder: Guski, Bruno, Ing. grad., Marienburger
Strasse 7, D-5420 Lahnstein (DE)
Erfinder: Martin, Udo, C.S. Schmidt-Strasse 36,
D-5420 Lahnstein (DE)

## Masse und Zusatzmittel zur Herstellung von Gipsformen

Die Erfindung betrifft die Herstellung von Gipsformen mit Zusatzstoffen, welche die Gebrauchseigenschaften der Formen verbessern.

Es ist bekannt, Gipse für die Herstellung von Gipsformen, wie sie u. a. in den keramischen Industrien eingesetzt werden, mit Zusätzen zu versehen, welche die Verarbeitungseigenschaften des Gipses und die Gebrauchseigenschaften der Gipsformen verbessern. Hierzu werden Härtemittel, wie zum Beispiel Kunststoffdispersionen auf Polyvinylacetat- und Polyacrylbasis, Lösungen synthetischer Harze, ionische Cellulosederivate, Aluminiumsulfat, Calciumhydrogensulfat, Verflüssigungsmittel wie Nonylphenoloxäthylate, sulfit- oder sulfonsäuremodifizierte Melaminharze, kolloidale Kieselsäure, wäßrige Kieselsäuresole, außerdem Expansionsregler, Abbindebeschleuniger oder Abbindeverzögerer allein oder in Kombination mit Härte- und Verflüssigungsmitteln verwendet.

Für den Zweck der Abbindeverzögerung sind verschiedenartige Stoffe, die als Schutzkolloid wirken oder die Löslichkeit des Gipses herabsetzen, bekannt, wie z. B. Leim, Gelatine, Kasein, Proteine, Gummi Arabicum, Melasse, Tannine, organische Säuren und deren Salze, Alkohol, Glycerin, Zucker, Ether u. a.

Aus der US-A 2 966 473 sind Gipsmassen mit Zusätzen von Harnstoff-Formaldehyd-Harzlösungen bekannt, die verbesserte Festigkeit aufweisen, jedoch ohne die erforderliche Porosität und ohne genügendes Wasseraufnahmevermögen der daraus hergestellten Formen. Die DE-C 1 805 126 beschreibt eine Masse zur Herstellung von Gips-Arbeitsformen für die keramische Industrie mit erhöhter mechanischer Festigkeit, die durch Zusatz eines durch Sulfit- oder Sulfonsäuregruppen modifizierten Melaminharzes erreicht wird. Dieser Zusatz hat jedoch den Nachteil, daß er wiederum das für keramische Gipsformen so wichtige Saugvermögen zu stark verringert.

In der US-A 3 748 290 wird ferner eine Gipsmasse aus $\alpha$- und $\beta$-Halbhydrat, mit einem Gehalt an mit Sulfit- oder Sulfonsäuregruppen modifizierten Melaminharzen, beschrieben, der ein erhöhtes Porenvolumen und größere Saugfähigkeit mittels eines im wäßrigen Medium Luft- bzw. Gasbläschen freisetzenden Zusatzmittels verliehen wird; zur besseren Verteilung dieser porenbildenden Bläschen in der Gipsmasse können dabei zusätzlich Methyl- und Carboxymethyl-Cellulose als Emulgatoren Verwendung finden. Jedoch geht diese Art der Porenbildung auf Kosten der Festigkeit.

Der vorliegenden Erfindung liegt daher die Aufgabe zugrunde, Zusatzmittel zu finden, mit denen die mechanischen Eigenschaften der Gipsformen verbessert werden, ohne daß sich die Kapillarwirkung und Saugfähigkeit dabei wesentlich vermindert.

Es wurde nun gefunden, daß die mechanischen Eigenschaften von Gipsformen verbessert und dabei Kapillarwirkung und Saugfähigkeit derselben kaum negativ beeinflußt werden, wenn die auf Basis von $\alpha$- und/oder $\beta$-Calciumsulfathalbhydrat bestehende Gipsmasse neben einem an sich bekannten Gehalt an mit Sulfit- oder Sulfonsäuregruppen modifizierten Melaminharzen als weitere Komponente Monosaccharide und/oder Oligosaccharide und/oder Polyole und/oder deren nichtionische Oxalkylierungsprodukte enthält.

Für die Herstellung von Gießformen, Drehformen und Preßformen werden diese Zusätze dem Gips in einer Menge von, bezogen auf diesen, insgesamt 0,05 bis 6% zugesetzt, vorzugsweise in einer Menge von 0,1 bis 1,5%.

Dabei setzt sich die Summe dieser Zusätze aus 85—15% Mono- und/oder Oligo-Sacchariden und/oder Polyolen und/oder deren nichtionischen Oxalkylierungsprodukten und aus 15—85% mit Sulfit- oder Sulfonsäuregruppen modifizierten Melaminharzen zusammen.

Als weitere, erfindungsgemäß wirksame Komponente können gleichzeitig Salze von Ligninsulfonsäuren vorhanden sein, die in einer Menge von 1 bis 60%, bezogen auf die Gesamtmenge der Zusätze, enthalten sein können; vorzugsweise kommt hiervon ein Zusatz im Bereich von 5 bis 20% in Betracht.

Außerdem können die bekannten Zusätze wie Expansionsregler, Härter, Verflüssiger, Abbindebeschleuniger und bzw. oder Abbindeverzögerer u. dgl. in der Masse enthalten sein.

Die genannten Zusätze können sowohl der Gipsmasse einzeln oder gruppenweise zugemischt werden, sie können aber vorzugsweise auch in Form einer Zubereitung dieser Zusätze gemeinsam als fertiges Zusatzmittel dem aus einem $\alpha$- und $\beta$-Calciumsulfathalbhydrat-Gemisch bestehenden Gips zugesetzt werden.

Das fertige Zusatzmittel stellt somit eine Zubereitung aus den genannten Komponenten Mono- und/oder Oligosaccharide und/oder Polyole und/oder deren nichtionische Oxalkylierungsprodukte, sulfit- oder sulfonsäuremodifizierte Melaminharze, Salze von Ligninsulfonsäuren und ggf. übliche Zusätze wie Expansionsregler, Härter, Verflüssiger, Abbindebeschleuniger und bzw. oder Abbindeverzögerer und dergleichen dar.

Das Zusatzmittel kann in Form einer Lösung oder Aufschlämmung des Komponentengemisches oder vorzugsweise in Pulverform angewendet werden, wobei die Pulverisierung mittels Sprühtrocknung, Walzentrocknung oder ähnlicher Trocknungsverfahren vorgenommen wird.

Die Anwendung des fertigen Zusatzmittels erfolgt ebenso wie diejenige der Einzelkomponenten in einer Menge von 0,05 bis 6%, vorzugsweise im Bereich 0,1 bis 1,5%, bezogen auf die Gipsmasse.

Hierfür können Monosaccharide und Oligosaccharide wie beispielsweise Pentosen, Glucose, Fructose, Saccharose, Maltose, Dextrose, Tri- bis Hexasaccharide sowie die nichtionischen Oxalkylierungsprodukte dieser Mono- und Oligosaccharide ausgewählt werden. Auch Polyole und Zuckeralkohole wie beispielsweise Sorbit sowie deren entsprechende nichtionische Oxalkylierungsprodukte sind hierfür verwendbar.

Die Gipsmassen, denen die erfindungsgemäßen Zusatzmittel zugesetzt werden, bestehen wie üblich aus den beiden Komponenten $\alpha$- und $\beta$-Calciumsulfathalbhydrat, wobei das Mischungsverhältnis derselben jeweils zwischen 0% und 100% liegen kann.

Die sulfit- oder sulfonsäuremodifizierten Melaminharze, wie sie zum Beispiel in Form der unter dem Warenzeichen »Melment« handelsüblichen Produkte pulverförmig oder flüssig vorliegen, sind erfindungsgemäß mit Bezug auf 100% Wirksubstanz angegeben.

Als Ligninsulfonat eignet sich üblicherweise das Calciumsalz, andere Erdalkali- sowie Alkalisalze sind ebenfalls geeignet.

Das Anwendungsgebiet der erfindungsgemäßen Gipsmassen und Zusatzmittel erstreckt sich vorzugsweise auf die fein- und grobkeramischen Industrien, daneben aber auch auf Gießerei, Kunststoffverformung u. ä.

Die Erfindung wird durch die nachstehenden Beispiele näher erläutert, ohne aber auf diese beschränkt zu sein.


### Beispiel 1

Für die Herstellung von Drehformen wird einer handelsüblichen Gipsmischung aus ca. 30% $\alpha$-Calciumsulfathalbhydrat und ca. 70% $\beta$-Calciumsulfathalbhydrat eine Zubereitung aus 0,4% sulfitmodifiziertem Melaminharz, 0,1% Monosaccharid (Glucose) und 0,35% Polysaccharid zugesetzt. Mit einem Gips-Wasser-Verhältnis von 1,65 : 1 können daraus Drehformen mit einer 120% erhöhten Haltbarkeit, verglichen mit zusatzlosen Gipsmassen, hergestellt werden.


### Beispiel 2

Für die Herstellung von Preßformen wird einer handelsüblichen Gipsqualität mit hohem Gehalt an $\alpha$-Calciumsulfathalbhydrat eine Zubereitung aus 0,5% sulfitmodifiziertem Melaminharz, 0,1% Disaccharid und 0,5% Monosaccharid (Dextrose) zugesetzt. Mit einem Gips-Wasser-Verhältnis 2,6 : 1 und 0,03% Citronensäure wird eine Preßform hergestellt, deren Druckfestigkeit um 140% und deren Biegezugfestigkeit um 120% gegenüber zusatzlosen Gipsmassen erhöht ist.


### Beispiel 3

Aus einer handelsüblichen Gipsqualität mit ca. 20% $\alpha$-Calciumsulfathalbhydrat und ca. 80% $\beta$-Calciumsulfathalbhydrat wird mit einem Gips-Wasser-Verhältnis von 1,6 : 1 unter Zusatz einer Zubereitung aus 0,25% sulfitmodifiziertem Melaminharz, 0,15% Polyol (Sorbit) und 0,05% Calciumligninsulfonat eine Gießform unter gleichzeitiger Zugabe von 3% Calciumhydrogenphosphat hergestellt. Diese zeigt bei nahezu gleicher Saugfähigkeit eine Steigerung der Haltbarkeit um ca. 30% gegenüber zusatzloser Gipsmasse.


## Patentansprüche

1. Gipsmasse auf Basis von $\alpha$- und/oder $\beta$-Calciumsulfathalbhydrat für die Herstellung von Gipsformen, mit einem Gehalt an mit Sulfit- oder Sulfonsäuregruppen modifizierten Melaminharzen, dadurch gekennzeichnet, daß die Masse als weitere Komponente Monosaccharide und/oder Oligosaccharide und/oder Polyole und/oder deren nichtionische Oxalkylierungsprodukte enthält.

2. Gipsmasse nach Anspruch 1, dadurch gekennzeichnet, daß die Masse, bezogen auf die Gipskomponente, 0,05 bis 6% eines Gemisches von Monosacchariden und/oder Oligosacchariden und/oder Polyolen und/oder deren nichtionischen Oxalkylierungsprodukten mit sulfit- oder sulfonsäuremodifizierten Melaminharzen enthält.

3. Gipsmasse nach den Ansprüchen 1 und 2, dadurch gekennzeichnet, daß sich das Zusatzgemisch aus 85—15% Monosacchariden und/oder Oligosacchariden und/oder Polyolen und/oder deren nichtionischen Oxalkylierungsprodukten und aus 15—85% sulfit- oder sulfonsäuremodifizierten Melaminharzen zusammensetzt.

4. Gipsmasse nach Anspruch 3, dadurch abgewandelt, daß das Zusatzmittel außerdem 1—60%, vorzugsweise 5—20%, Ligninsulfonat, bezogen auf die Menge des Zusatzgemisches, enthält.

5. Gipsmasse nach den Ansprüchen 1 bis 4, dadurch gekennzeichnet, daß sie außerdem Expansionsregler, Härter, Verflüssiger, Abbindebeschleuniger bzw. Abbindeverzögerer enthält.

6. Zusatzmittel zu Gipsmassen auf Basis von $\alpha$- und/oder $\beta$-Calciumsulfathalbhydrat für die Herstellung von Gipsformen, mit einem Gehalt an mit Sulfit- oder Sulfonsäuregruppen modifizierten Melaminharzen, dadurch gekennzeichnet, daß sich das Zusatzmittel aus 85—15% Monosacchariden und/oder Oligosacchariden und/oder Polyolen und/oder deren nichtionischen Oxalkylierungsprodukten und aus 15—85% sulfit- oder sulfonsäuremodifizierten Melaminharzen zusammensetzt.

7. Zusatzmittel nach Anspruch 6, dadurch abgewandelt, daß es außerdem 1—60%, vorzugsweise 5—20% Ligninsulfonat enthält.

8. Zusatzmittel nach den Ansprüchen 6 und 7, dadurch gekennzeichnet, daß es außerdem Expansionsregler, Härter, Verflüssiger, Abbindebeschleuniger bzw. Abbindeverzögerer enthält.

9. Zusatzmittel nach den Ansprüchen 6 bis 8, dadurch gekennzeichnet, daß es pulverisiert ist mittels Sprühtrocknung oder Walzentrocknung einer Lösung oder Aufschlämmung des Komponentengemisches.

10. Verwendung des Zusatzmittels nach den Ansprüchen 6 bis 9 als Beimischung zu Gipsmassen auf Basis von $\alpha$- und/oder $\beta$-Calciumsulfathalbhydrat für die Herstellung von Gipsformen.

11. Verwendung des Zusatzmittels nach Anspruch 10 in einer Menge von 0,05 bis 6%, bezogen auf die Gispkomponente.

## Claims

1. A plaster mixture based upon $\alpha$- and/or $\beta$-type calciumsulfate-semihydrate for the manufacture of plaster moulds, containing melamine resins modified by sulfite or sulfonic acid groups, said mixture containing as further constituent monosaccharides and/or oligosaccharides and/or polyols and/or the nonionic oxalkylation products thereof.

2. A plaster mixture according to claim 1, wherein the mixture contains 0,05 to 6% by weight, referred to the gypsum constituent, of a mixture of monosaccharides and/or oligosaccharides and/or polyols and/or the nonionic oxalkylation products thereof with melamine resins modified by sulfite or sulfonic acid groups.

3. A plaster mixture according to claims 1 and 2, wherein the additive mixture is composed of 85—15% by weight of monosaccharides and/or oligosaccharides and/or polyols and/or the nonionic oxalkylation products thereof, and of 15—85% by weight of melamine resins modified by sulfite or sulfonic acid groups.

4. A plaster mixture according to claim 3, altered thereby, that the additive contains additionally 1 to 60%, preferably 5 to 20% by weight, of lignine sulfonate, referred to the quantity of additive mixture.

5. A plaster mixture according to claims 1 to 4, wherein said mixture contains in addition expansion regulators, hardeners, liquefying agents and setting accelerators or setting retarders.

6. An additive to plaster mixtures based upon $\alpha$- and/or $\beta$-type calciumsulfate-semihydrate for the manufacture of plaster moulds, containing melamine resins modified by sulfite or sulfonic acid groups, said additive being composed of 85 to 15% by weight of monosaccharides and/or oligosaccharides and/or polyols and/or the nonionic oxalkylation products thereof, and of 15 to 85% by weight of melamine resins modified by sulfite or sulfonic acid groups.

7. An additive according to claim 6, altered thereby, that the additive contains additionally 1 to 60%, preferably 5 to 20% by weight, of lignine sulfonate.

8. An additive according to claims 6 and 7, wherein said additive contains in addition expansion regulators, hardeners, liquefying agents and setting accelerators or setting retarders.

9. An additive according to claims 6 to 8, said additive being powdered by spray drying or drum drying a solution or a slurry of the mixture of constituents.

10. The application of the additive according to claims 6 to 9 as admixture to plaster mixtures based upon $\alpha$- and/or $\beta$-type calciumsulfate-semihydrate for the manufacture of plaster moulds.

11. The application of the additive according to claim 10 in a quantity of 0,05 to 6% by weight, referred to the gypsum constituent.

## Revendications

1. Masse de plâtre à base de sulfate de calcium semihydraté de type $\alpha$ et/ou $\beta$ pour la production de moules en plâtre présentant une teneur en résines de mélamines modifiées par des groupes de sulfites ou d'acides sulfoniques, caractérisée en ce que la masse comprend comme autres composants de monosaccharides et/ou d'oligosaccharides et/ou de polyols et/ou de leurs produits d'oxalkylation non ioniques.

2. Masse de plâtre selon la revendication 1, caractérisée en ce que la masse contient de 0,05 à 6%, par rapport au plâtre, d'un mélange de monosaccharides et/ou d'oligosaccharides et/ou de polyols et/ou de leurs produits d'oxalkylation non ioniques, avec de résines de mélamines sulfitées ou sulfonées.

3. Masse de plâtre selon les revendications 1 et 2, caractérisée en ce que le mélange additif se compose de 85 à 15% de monosaccharides et/ou oligosaccharides et/ou polyols et/ou leurs produits d'oxalkylation non ioniques, et de 15 à 85% de résines de mélamines sulfitées ou sulfonées.

4. Masse de plâtre selon la revendication 3, modifiée en ce que le produit additif contient en plus de 1 à 60%, préférentiellement de 5 à 20% de sulfonate de lignine, rapporté à la quantité du produit additif.

5 Masse de plâtre selon les revendications 1 a 4, caractérisée en ce qu'elle contient en plus des régulateurs d'expansion, des durcisseurs, des fluidifiants, des accélérateurs ou des retardateurs de prise.

6. Produit additif pour masses de plâtre à base de sulfate de calcium semi-hydraté de type $\alpha$ et/ou $\beta$ pour la production de moules en plâtre présentant une teneur en résines de mélamines modifiées par des groupes de sulfites ou d'acides sulfoniques, caractérisé en ce que l'additif se compose de 85 à 15% de monosaccharides et/ou oligosaccharides et/ou polyols et/ou leurs produits d'oxalkylation non ioniques, et de 15 à 85% de résines de mélamines sulfitées ou sulfonées.

7. Produit additif selon la revendication 6, modifié en ce qu'il contient en plus de 1 à 60% préférentiellement de 5 à 20%, de sulfonate de lignine.

8. Produit additif selon les revendications 6 et 7, caractérisé en ce qu'il contient en plus des régulateurs d'expansion, des durcisseurs, des fluidifiants, des accélérateurs ou des retardateurs de prise.

9. Produit additif selon les revendications 6 à 8, caractérisé en ce qu'il se présente sous forme d'une poudre obtenue au moyen d'un séchage par pulvérisation ou d'un séchage au tambour d'une solution ou d'une suspension du mélange des composants.

10. Utilisation du produit additif selon les re- vendications 6 à 9 comme additif aux masses de plâtre à base de sulfates de calcium semi-hy- dratés $\alpha$ et/ou $\beta$, destinées à la production de moules.

11. Utilisation du produit additif selon la revendication 10, dans une proportion de 0,05 à 6%, rapporté au plâtre.